# EUROPÄISCHE PATENTSCHRIFT

(11) **EP 3 035 034 B1**
(45) Veröffentlichungstag und Bekanntmachung des Hinweises auf die Patenterteilung: **14.03.2018**
(21) Anmeldenummer: 15199471.2
(22) Anmeldetag: 11.12.2015
(51) Int. Cl.: G01N 21/21, G01J 4/00, G01J 3/447, G02B 5/30, G02B 27/28, G02F 1/01

(54) **ANORDNUNG ZUR ERFASSUNG VON REFLEXIONS-ANISOTROPIE**
ASSEMBLY FOR THE DETECTION OF REFLECTION ANISOTROPY
SYSTÈME DE DÉTECTION D'ANISOTROPIE DE RÉFLEXION

(30) Priorität: 19.12.2014 DE 102014119228
(43) Veröffentlichungstag der Anmeldung: 22.06.2016
(73) Patentinhaber: Leibniz - Institut für Analytische Wissenschaften - ISAS - e.V., 44139 Dortmund (DE)
(72) Erfinder: Speiser, Eugen, 10245 Berlin (DE); Esser, Norbert, 14197 Berlin (DE); Falkenburg, Johannes, 10247 Berlin (DE)
(74) Vertreter: Weisse, Renate

(56) Entgegenhaltungen:
- DE-A1- 19 745 607
- GB-A- 882 244
- US-A1- 2005 041 250
- US-A1- 2005 248 763
- US-B1- 6 753 961
- STEVENS ET AL: "A perpendicular-incidence microellipsometer", SURFACE SCIENCE, NORTH-HOLLAND, AMSTERDAM, NL, Bd. 96, Nr. 1-3, 1980, Seiten 174-201, XP025786904, ISSN: 0039-6028, DOI: 10.1016/0039-6028(80)90302-7 [gefunden am 1980-06-01]
- J. DICKE ET AL: "Reflection anisotropy microscopy: improved set-up and applications to CO oxidation on platinum", SURFACE SCIENCE, Bd. 462, Nr. 1-3, 2000, Seiten 90-102, XP055262232, AMSTERDAM, NL ISSN: 0039-6028, DOI: 10.1016/S0039-6028(00)00571-9
- WEIGHTMAN P ET AL: "Reflection anisotropy spectroscopy", REPORTS ON PROGRESS IN PHYSICS, INSTITUTE OF PHYSICS PUBLISHING, BRISTOL, GB, Bd. 68, Nr. 6, 5. Mai 2005 (2005-05-05), Seiten 1251-1341, XP020084655, ISSN: 0034-4885, DOI: 10.1088/0034-4885/68/6/R01
- HAUGE ET AL: "Recent developments in instrumentation in ellipsometry", SURFACE SCIENCE, NORTH-HOLLAND, AMSTERDAM, NL, Bd. 96, Nr. 1-3, 1980, Seiten 108-140, XP025786899, ISSN: 0039-6028, DOI: 10.1016/0039-6028(80)90297-6 [gefunden am 1980-06-01]

## Beschreibung

### Technisches Gebiet

Die Erfindung betrifft eine Anordnung zur Erfassung der Reflexions-Anisotropie einer Probe mit den Merkmalen des Oberbegriffs des Anspruchs 1 und ein Verfahren zur Erfassung der Reflexions-Anisotropie einer Probe.

Reflexions-Anisotropie ist eine optische Eigenschaft von dielektrischen Proben, Wafern, Metallen, Nano- und Mikrostrukturen, Gitterstrukturen und dergleichen. Zu ihrer Untersuchung kann je nach gewünschtem Ergebnis Reflexions-Anisotropie-Spektroskopie (RAS) und Reflexions-Anisotropie-Mikroskopie (RAM) verwendet werden. Bei beiden Verfahren wird polarisiertes Licht an einer Fläche reflektiert und die Veränderungen der Lichteigenschaften mittels eines Detektors ermittelt. Bei der RAS wird dabei die Veränderung der Intensität bei Reflexion mit unterschiedlich polarisiertem Licht in Abhängigkeit von der Wellenlänge untersucht. Es wird also für einen Punkt auf der Probe ein Spektrum erzeugt, welches die spektralen Eigenschaften der Anisotropie in diesem Punkt wiedergibt. Bei der RAM wird die Veränderung der Intensität bei Reflexion mit unterschiedlich polarisiertem Licht für eine Vielzahl von Punkten bei einer Wellenlänge untersucht. Es wird also ein Bild der Probe bei monochromatischer Strahlungsquelle erzeugt.

Neben Verfahren, bei der die Probe unter einem Winkel beleuchtet wird, der ungleich 90° ist, gibt es auch RAS- und RAM- Verfahren, bei der die Probe unter einem Winkel von 90° beleuchtet wird. Der reflektierte Strahl fällt also in sich selbst zurück. Ein Strahlteiler ermöglicht die Detektion des reflektierten Strahls.

Wird polarisierte Strahlung verwendet, so ist die Differenz der Reflektivität und damit die Intensitätsdifferenz bei verschiedenen Polarisationszuständen ein Maß für die dielektrischen Eigenschaften der Probe. Für die Untersuchung von kleinen Strukturen, beispielsweise von mikroelektrischen Strukturen, ist eine hohe Ortsauflösung der Messung zur Ermittlung der optischen Anisotropie im Mikrometer-Bereich erforderlich. Es ist weiterhin wünschenswert, eine quantitative Auswertung der Anisotropie vornehmen zu können. Außerdem sind die dielektrischen Eigenschaften von Proben in der Regel wellenlängenabhängig.

Bei der Erfassung der Anisotropie von Proben wird die Probe mit Strahlung in verschiedenen Polarisationszuständen untersucht. Diese werden beispielsweise mit einem photoelastischen Modulator (PEM) zeitlich moduliert. Ein PEM besteht aus einem optisch isotropen Kristall, der mechanisch gepresst und auseinandergezogen wird. Dadurch entstehen Druckschwankungen. Ein Piezoelement erzeugt Druckschwankungen bei der Resonanzfrequenz (Anlegen einer Wechselspannung). Parallel zur Schwankungsamplitude der Druckschwankungen polarisiertes Licht läuft dann mit einer veränderten Geschwindigkeit durch den Kristall. Die Verzögerung Δt₂ ist druckabhängig und hängt von der Zeit t und der Schwingungsfrequenz ab. Senkrecht zu den Druckschwankungen polarisiertes Licht wird nicht beeinflusst. Der Betrag von Feldvektor E des senkrecht polarisierten Lichts ändert sich also mit der Zeit t (bzw. Wellenlänge λ) z.B. sinusförmig.

Bei einer zusammengesetzten Welle mit "schräger" Polarisation und identischen Anteilen aus senkrecht und parallel linear polarisiertem Licht ändert sich nur der parallel polarisierte Anteil. Es entsteht ein zirkular polarisiertes Licht.

Trägt man die Polarisationsrichtung über die Zeit auf, so ergibt sich folgende Situation: Anfänglich (im Nullpunkt) ist das Licht rein linear in "schräger" Richtung polarisiert, z.B. mit einer Resultierenden bei 45°. Der senkrechte und parallele Anteil sind identisch. Nach einer viertel Periode (λ/4) ist das Licht vollständig zirkular polarisiert, da sich nurder parallele Anteil periodisch ändert. Nach einer weiteren Viertelperiode bei λ/2 ist das Licht wieder linear polarisiert, aber in einer um 90° versetzten Richtung. Im weiteren Verlauf wird in die andere Richtung zirkular polarisiert und nach weiteren λ/4 ist das Licht linear polarisiert. Nach einer Umlaufzeit T (=λ) ist das Licht wieder wie anfangs polarisiert. Der Vorgang der zeitlichen Modulation des Polarisationszustands heißt Polarisationsmodulation. Der hierbei im PEM erzeugte modulierte Gangunterschied zwischen den Polarisationsrichtungen ist wellenlängenabhängig und muss je nach verwendeter Wellenlänge angepasst werden. Die Polarisationsmodulation mit einem PEM ist aufwändig.

Bei üblichen Anordnungen wird zur Messung eine Strahlungsquelle vor einen Polarisator gestellt. Die am Polarisator polarisierte Strahlung wird durch einen PEM geleitet. Dadurch wird die Polarisationsrichtung moduliert. Die an der Probe reflektierte Strahlung wird durch einen Analysator und ein Spektrometer auf einen Flächendetektor geleitet.

Der Intensitätsverlauf über die Zeit zeigt eine mittlere Reflektivität R auf der eine Differenz ΔR aufmoduliert ist. Wenn der PEM spannungsfrei ist, bleibt der Polarisationszustand des durch den PEM gehenden Lichtes unbeeinflusst. Wenn der PEM einem Druck ausgesetzt ist, verändert dieser die Polarisationsrichtung des hindurchgehenden Lichtes. Zu diesem modulierten Signal addiert sich der Effekt aus der Reflektivität der Probe. Die Änderung ist sehr klein und nur etwa ein Zehntel Prozent des Mittelwertes. Dieser kann mit Lock-In mit einem guten Signal-Rauschverhältnis ermittelt werden. Die Änderung der Reflektivität ist unabhängig von Änderungen der Komponenten.

Die Reflektivität ist wellenlängenabhängig. Es kann also über die Wellenlänge des Lichts gescannt werden. Dabei ergibt sich ein RAS-Spektrum. Es kann weiterhin die Reflektivität für jeden Punkt der Probe erfasst werden, vorteilhafterweise mit hoher Ortsauflösung, indem über die Fläche gescannt wird. Hierzu wird ein Spiegel oder eine Linse vor der Probe zum Fokussieren benötigt. Dabei ergibt sich ein RAM-Bild.

### Stand der Technik

Verschiedene bekannte Anordnungen verwenden einen eingangs beschriebenen PEM zur Modulation der Polarisation. Beispielhaft seien hier genannt die Veröffentlichung "Micro reflectance difference techniques: Optical probes for surface exploration" von L.F. Lasatras-Martinez et al. in Phys. Status Solidi B 249. Mp- 6. 1119-1123 (2012) und die Veröffentlichung "Inplane optical anisotropy of GaAs/AlAs multiple quantum wells probed by microscopic reflectance difference spectroscopy" von B.Koopmans et al. in Phys. Stat. Sol. (a) 170, 307 (1998). Die Verwendung eines PEM ist aufwändig.

US 6 753 961 B1 (Norton) offenbart ein Ellipsometer, bei der polarisierte Strahlung mittels PEM moduliert und über einen herkömmlichen Strahlteiler senkrecht auf die Probe gelenkt wird. Eine Änderung des Polarisationszustands des reflektierten Strahls wird mittels eines Analysators ermittelt.

US 7 889 340 B1 (Flock) offenbart eine RAS-Anordnung, bei der eine Probe senkrecht beleuchtet wird. Hier wird ein rotierender Kompensator verwendet. Ein Polarisator lässt nur Strahlung mit einer definierten Polarisationsrichtung durch. Ein rotierender Polarisator lässt also zu jedem Zeitpunkt nur linear polarisierte Strahlung durch, auch wenn die Polarisationsrichtung zeitabhängig immer in unterschiedliche Richtung zeigt. Der in der genannten Druckschrift verwendete rotierende Kompensator hingegen, verändert die Phasenbeziehung der senkrecht aufeinander stehenden Komponenten der Polarisation. Je nach Zeitpunkt lässt ein rotierender Kompensator daher je nach Phasenbeziehung mal linear polarisierte Strahlung, mal elliptisch polarisierte Strahlung oder zirkular polarisierte Strahlung durch. Mit anderen Worten: Der Kompensator moduliert den Polarisationszustand, aber nicht die Intensität.

Aus US 7 173 700 B2 (Aspnes) ist es bekannt, einen rotierenden Kompensator in einem Ellipsometer zu verwenden. Zur Strahlteilung wird ein Wollaston-Prisma als Polarisationsstrahlteiler verwendet. Nachteilig bei dieser Anordnung ist es, dass Einflüsse der verwendeten Komponenten auf das gemessene Signal nicht von Effekten der Probe unterschieden werden können. Das hierbei verwendete Wollaston-Prisma ist nicht achromatisch und somit Wellenlängen-abhängig. Ebenso entsteht durch den rotierenden Kompensator eine Wellenlängenabhängigkeit, so dass polychromatisches Messen nicht ohne entsprechende Anpassungen möglich ist.

Die Veröffentlichung "Reflection anisotropy microscopy: improved set-up and applications to CO oxidation on platinum" von J.Dicke et al. in Surface Science 462, 90-102 (2000) zeigt eine Anordnung mit einem Fosterprisma als Polarisationsstrahlteiler. Die Anordnung verwendet einen feststehenden Polarisator zwischen Fosterprisma und Detektor. Bei einer solchen Anordnung gelangt nur Strahlung auf die Probe, die in einer definierten Richtung polarisiert ist. Eine Polarisationsmodulation ist nicht vorgesehen.

Die Veröffentlichung von Stevens et al. "A perpendicular-incidence microellipsometer" in Surface Science, North Holland, Amsterdam, Bd. 96, Nr. 1-3 (1980), S. 174-201 offenbart die Verwendung eines Foster-Prismas in verbindung mit einer rotierenden λ/2-Platte. Eine solche Platte lässt auf dem Rückweg zirkular polarisierte Strahlung durch. Eine anisotrope Probe beeinflusst die Strahlung "gemischt", d.h. die zurücklaufende Strahlung hat sowohl linear polarisierte Anteile, als auch zirkular polarisierte Anteile. Diese zirkular polarisierten Anteile können das Fosterprisma auf dem Rückweg ohne Auslöschung passieren, sodass das am Detektor gemessene Signal auch in den Signalminima nicht Null ist. Auf Signalebene wird nicht zwischen den linear und zirkular polarisierten Anteilen der Probe unterschieden. Eine Selbstreferenzierung ist mit der offenbarten Anordnung nicht möglich.

### Offenbarung der Erfindung

Es ist Aufgabe der Erfindung, eine Vorrichtung der eingangs genannten Art zu schaffen, die kleine Polarisations-Anisotropien bei hoher Ortsauflösung bildgebend erfasst. Es ist ferner Aufgabe der Erfindung, eine Anordnung zu schaffen, die weitgehend unempfindlich gegenüber Einflüssen der eingesetzten optischen Komponenten ist und eine hohe Richtigkeit und Messgenauigkeit ermöglicht. Es ist ferner Aufgabe der Erfindung eine Anordnung zu schaffen, die polychromatisches Messen ermöglicht.

Erfindungsgemäß wird die Aufgabe dadurch gelöst, dass die Mittel zur Polarisationsmodulation einen rotierenden Polarisator enthalten.

Insbesondere wird die Aufgabe auch durch ein Verfahren zur Erfassung der Reflexions-Anisotropie einer Probe gelöst mit den Schritten:
(a) Erzeugen von Strahlung mit undefiniertem Polarisationszustand;
(b) Erzeugen eines definierten Polarisationszustands der Strahlung mittels eines Polarisationsstrahlteilers, der die Strahlung auf dem Hinweg in einer ersten Polarisationsrichtung polarisiert;
(c) Modulieren des Polarisationszustands der polarisierten Strahlung durch einen rotierenden Polarisator;
(d) Reflektieren der Strahlung an der Probe unter einem rechten Winkel in sich selbst zurück;
(e) Leiten der reflektierten Strahlung in umgekehrter Richtung durch den rotierenden Polarisator und den Polarisationsstrahlteiler, so dass der Strahl in einen ersten und einen zweiten Teil geteilt wird, wobei der erste Teil die Polarisationszustände erhält und der zweite Teil eine zu dem ersten Teil senkrechte Polarisationsrichtung aufweist; und
(f) Erfassen des von der Probe reflektierten des zweiten Teils der Strahlung an einem Detektor hinter dem Polarisationsstrahlteiler, der eine zu der Polarisationsrichtung der Strahlung des Hinwegs senkrechte Polarisationsrichtung hat.

Ein besonders gut geeignetes Beispiel für einen Polarisationsstrahlteiler, der bei Umkehrung der Durchgangsrichtung die Polarisationszustände erhält, ist das Foster-Prisma. Ein Fosterprisma ist ein Glan-Thomson Prisma, bei dem zwei Prismen aus einem optisch aktiven Material zusammengefügt sind. Die Kristallachsen der Prismen verlaufen parallel zur Verbindungsebene und senkrecht zum einfallenden Strahl. Häufig bestehen die beiden Prismen aus dem gleichen Material. Mit einem Fosterprisma wird Strahlung bei einem ersten Durchgang (Hinweg) polarisiert. Auf dem Rückweg in umgekehrter Richtung wird die Strahlung in einer Richtung polarisiert, die sich senkrecht zur Polarisationsrichtung der Strahlung auf dem Hinweg erstreckt und den Strahl seitlich aus dem Prisma ausgekoppelt.

Die von der Strahlungsquelle erzeugte, unpolarisierte Strahlung wird also nur in ausgewählten Polarisationsrichtungen vom Fosterprisma durchgelassen. Auf dem Hinweg in einer ersten Richtung und auf dem Rückweg in einer dazu senkrechten Richtung. Der in der erfindungsgemäßen Anordnung zwischen Polarisationsstrahlteiler und Probe vorgesehene rotierende Polarisator bewirkt zusätzlich eine zeitliche Modulation des Polarisationszustandes.

Bis auf Effekte der Probe ist die Strahlung zu jedem Zeitpunkt linear polarisiert. Die Polarisationsmodulation führt zu 4 Zeitpunkten, bei denen die Intensität am Detektor in jedem Fall Null ist. Wenn der rotierende Polarisator Strahlung durchlässt, deren Polarisationsrichtung senkrecht auf der Polarisationsrichtung des Polarisationsstrahlteilers in diesem Zeitpunkt auf dem Hinweg ist, gelangt keine Strahlung auf die Probe. Dann kann auch keine Strahlung zurück in Richtung auf den Detektor reflektiert werden, so dass die Intensität bei diesen beiden Polarisatorstellungen in jedem Fall Null ist. Intensitäten am Detektor sind auf äußere Einflüsse, etwa Streulicht zurückzuführen und können als Offset abgezogen werden.

Wenn der rotierende Polarisator Strahlung durchlässt, deren Polarisationsrichtung parallel zur Polarisationsrichtung des Polarisationsstrahlteilers zu diesem Zeitpunkt auf dem Hinweg ist, gelangt Strahlung auf die Probe. Bei dieser Stellung des rotierenden Polarisators steht die Polarisationsrichtung der reflektierten Strahlung aber gerade senkrecht zur Polarisationsrichtung des Polarisationsstrahlteilers auf dem Rückweg. Es gelangt also keine Strahlung zum Detektor. Das Signal ist Null.

Mit der Anordnung erhält man ein moduliertes Signal, dessen Modulationsfrequenz der 4.Harmonischen 4f der Rotationsfrequenz f des rotierenden Polarisators entspricht. Dabei versteht es sich, dass der Polarisator gleichmäßig und kontinuierlich rotieren kann, aber auch schrittweise, unterbrochen oder mit variablen Winkelgeschwindigkeiten, ohne dass dies Auswirkungen auf das Ergebnis der Messungen hätte. Wichtig ist lediglich, dass verschiedene Polarisationszustände verwirklicht werden und die Zeitabhängigkeit oder der Winkel bekannt sind.

Effekte durch Anisotropie der Probe verändern die Intensität der Extrema im Signalverlauf. Diese Effekte bewirken eine Amplitudenmodulation mit einer Modulationsfrequenz, die der 2.Harmonischen 2f der Rotationsfrequenz f des rotierenden Polarisators entspricht. Mit anderen Worten: eine isotrope Probe führt zu einer konstanten Amplitude.

Es ist leicht einsehbar, dass das Signal I(2f)/I(4f)=ΔR/R mit ΔR=Reflektivitätsdifferenzen und R=mittlere Reflektivität unabhängig von der Rotationsfrequenz des Polarisators ist. Der mit der Frequenz f rotierende Polarisator und eventuelle Justagefehler o.ä. haben keinen Einfluss auf das Signal. Die Messung ist eine selbstreferenzierende Messung mit bekanntem Nulldurchgang, bei der alle zu für die Messung benötigten Signalkomponenten moduliert sind. Darin unterscheidet sich die Anordnung von bekannten Anordnungen aus dem Stand der Technik.

Vorteilhafterweise ist der Detektor ein CCD-Array oder anderer Zeilen- oder Flächendetektor mit einer Vielzahl von Bildpunkten. Dies ermöglicht es, ein quantitatives Abbild der Anisotropie auf einem 2-dimensionalen Detektor zu erstellen. Weiter ermöglicht es, für einen Punkt der Probe ein ganzes RAS-Spektrum simultan quantitativ aufzunehmen, da alle im Strahlengang verwendeten Elemente, sowie auch das Modulationsprinzip, unabhängig von der Wellenlänge sind. So können eine Vielzahl von Signalen gleichzeitig aufgenommen werden. Beispielsweise kann ein RAS-Spektrum für einen Zeitpunkt erzeugt werden oder ein RAM-Bild der Probe bei einer Wellenlänge. Dann braucht im Gegensatz zu bekannten Anordnungen nicht gescannt werden und das Ergebnis ist in kurzer Zeit verfügbar. Aufgrund des parallelen Strahlenganges eignet sich die Anordnung auch für Mikroskopie-Anwendungen mit hoher Auflösung, beispielsweise im Mikrometer-Bereich.

Zur Erzeugung eines RAS-Spektrums ist es vorteilhaft, wenn die Strahlungsquelle zur Durchführung von Reflexions-Anisotropie-Spektroskopie eine Xe-Hochdruck-Lampe oder eine andere Strahlungsquelle mit einem kontinuierlichen Wellenlängenspektrum ist, und ein Spektrometer oder Spektralfilter im Strahlengang vor dem Detektor angeordnet ist. Mit dem Spektrometer wird die Strahlung spektral zerlegt. Die Intensität wird für jede Wellenlänge getrennt auf dem Detektor erfasst.

Es kann vorgesehen sein, dass optische Mittel zur Erzeugung eines parallelen Strahlbündels im Strahlengang vorgesehen sind, mit welchem die Probe flächig beleuchtbar ist. Dabei kann die Strahlungsquelle zur Durchführung von Reflexions-Mikroskopie ein Laser, eine andere monochromatische Strahlungsquelle oder eine Strahlungsquelle mit einem Spektralfilter oder Monochromator sein.

Die beschriebene Anordnung kann mit infrarotlicht-kompatiblen Komponenten versehen werden um im IR zu messen. Da alle für die Messung benötigten Signalanteile moduliert sind, eignet sich dieses Verfahren für die Verwendung von Infrarotdetektoren, die in der Regel kein DC(Gleichstrom)-Signal messen können. Darin unterscheidet sich die Anordnung von bekannten Anordnungen aus dem Stand der Technik.

Die beschriebene Anordung kann dahingehend modifiziert werden, dass zwischen rotierenden Polarisator und Probe ein feststehender Kompensator eingefügt wird. Dadurch wird es ermöglicht zusätzlich zum Realteil der Anisotropie den Imaginärteil zu messen.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung einer Anordnung zur Messung von Polarisations-Anisotropie einer Probe.
- Fig.2: zeigt die Anordnung aus Figur 1 zu dem Zeitpunkt, bei dem der Polarisator Strahlung mit der Polarisationsrichtung bei Winkel Φ=0° durchlässt.
- Fig.3: zeigt die Anordnung aus Figur 1 zu dem Zeitpunkt, bei dem der Polarisator Strahlung mit der Polarisationsrichtung bei Winkel Φ=45° durchlässt.
- Fig.4: zeigt die Anordnung aus Figur 1 zu dem Zeitpunkt, bei dem der Polarisator Strahlung mit der Polarisationsrichtung bei Winkel Φ=90° durchlässt.
- Fig.5: zeigt die Anordnung aus Figur 1 zu dem Zeitpunkt, bei dem der Polarisator Strahlung mit der Polarisationsrichtung bei Winkel Φ=135° durchlässt.
- Fig.6: zeigt die Abhängigkeit der Intensität am Detektor von der Polarisatorstellung des rotierenden Polarisators aus Figur 1 in einem Winkeldiagramm.
- Fig.7: zeigt die Abhängigkeit der Intensität am Detektor in Abhängigkeit von der Phase des rotierenden Polarisators aus Figur 1.
- Fig.8: ist ein Vergleich der Intensitäten am Detektor, die mit der Anordnung aus Figur 1 erhalten werden und der Intensitäten, die mit einer aus dem Stand der Technik bekannten Anordnung erhalten werden.
- Fig.9: illustriert die Funktionsweise eines Fosterprismas.
- Fig.10: zeigt eine Anordnung zur Messung eines RAS-Spektrums.
- Fig.11: zeigt eine Anordnung für RAM-Mikroskopie.

### Beschreibung des Ausführungsbeispiels

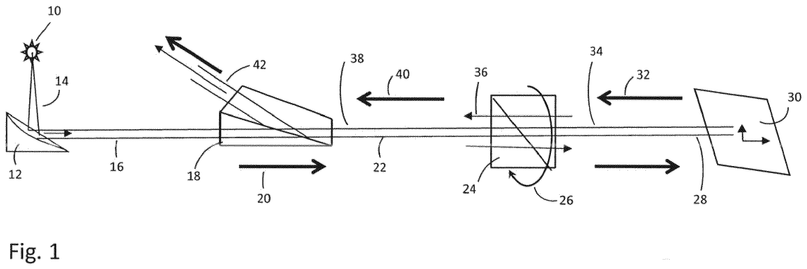

Figur 1 ist eine schematische Darstellung einer Anordnung zur Messung von Polarisationsanisotropie an einer Probe. Eine Xe-Kurzbogen-Hochdrucklampe 10 wird bei einem ersten Ausführungsbeispiel als Strahlungsquelle verwendet. Die Lampe 10 strahlt vom VUV bis in den Infrarotbereich kontinuierlich ab, wobei die größten Intensitäten im sichtbaren Wellenlängenbereich erzeugt werden.

Die von der Lampe 10 abgestrahlte Strahlung 14 wird durch eine geeignete Optik geleitet, die hier als gekrümmter Spiegel 12 repräsentiert ist. Es versteht sich, dass die Optik in der Praxis verschiedene Spiegel, Filter, Linsen dergleichen umfassen kann. Mit der Optik 12 wird aus der Strahlung 14 ein paralleles Strahlenbündel 16 erzeugt, das hier lediglich schematisch durch seine Randstrahlen repräsentiert ist.

Das parallele Strahlenbündel 16 ist polychromatisch und vollständig unpolarisiert. Es wird durch ein Fosterprisma 18 im Strahlengang geleitet. Dies ist der "Hinweg", dessen Richtung durch einen Pfeil 20 repräsentiert ist. Mit dem Fosterprisma 18 wird die Strahlung in einer ausgewählten Richtung - im vorliegenden Ausführungsbeispiel bei einem Winkel von Φ=0° linear polarisiert.

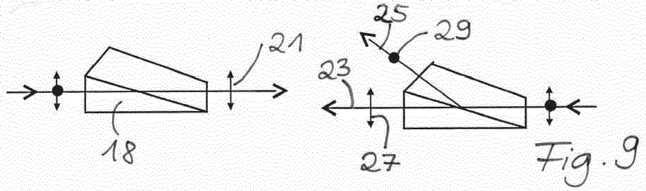

Figur 9 illustriert die Funktionsweise des Fosterprismas 18. Auf dem Hinweg 19 in einer ersten Richtung wird eine erste Polarisationsrichtung durchgelassen, die durch einen Pfeil 21 repräsentiert ist. Auf dem Rückweg wird der Strahl in zwei Teilstrahlen 23 und 25 aufgeteilt. Der Teilstrahl 23 hat die Polarisationsrichtung 27. Der Teilstrahl 25 hat eine Polarisationsrichtung 29, die senkrecht zur Polarisationsrichtung 27 verläuft.

Die aus dem Fosterprisma 18 austretende Strahlung 22 (Fig.l) wird durch einen rotierenden Polarisator 24 geleitet. Der Polarisator 24 rotiert mit konstanter Winkelgeschwindigkeit. Dies ist durch einen Pfeil 26 angedeutet. Nur, wenn der Polarisator 24 eine Winkelposition - im vorliegenden Ausführungsbeispiuel Φ=0° - einnimmt, bei der die gleiche Richtung durchgelassen wird, die auch vom Fosterprisma 18 durchgelassen wird, gelangt Strahlung durch den Polarisator 24.

Die durchgelassene Strahlung 28 trifft unter rechtem Winkel auf die Oberfläche einer Probe 30. Je nach Beschaffenheit der Probe 30 verändert sich durch die Reflexion die Intensität der reflektierten Strahlung und deren Polarisationszustand. Durch die Bestrahlung unter einem rechten Winkel wird der Strahl in sich selbst zurückreflektiert. Dies ist durch einen Pfeil 32 repräsentiert. Die zurücklaufende Strahlung 34 durchläuft auf dem Rückweg erneut den rotierenden Polarisator 24. Dies ist durch einen Pfeil 36 repräsentiert.

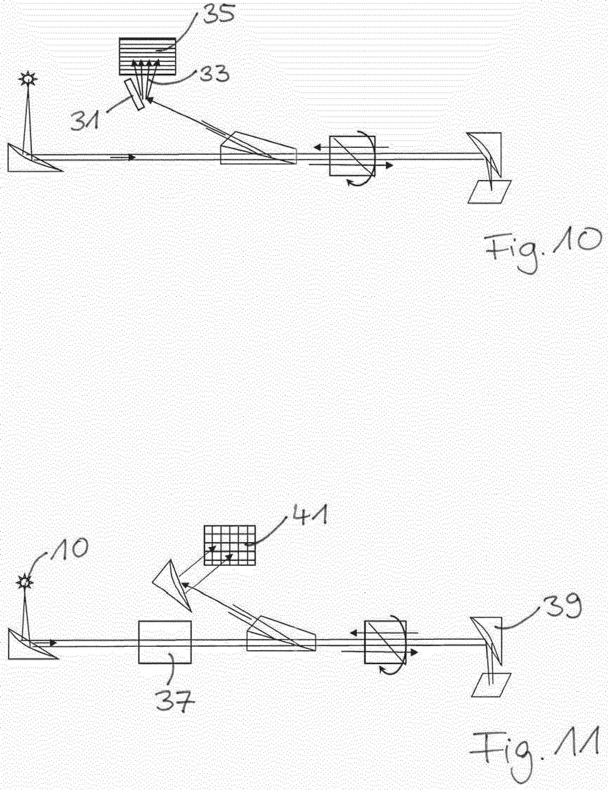

Hinter dem rotierenden Polarisator 24 durchläuft die Strahlung 38 erneut das Fosterprisma 18, allerdings in entgegengesetzter Richtung. Dies ist durch einen Pfeil 40 repräsentiert. Das Fosterprisma ist ein Polarisationsstrahlteiler, bei dem die Strahlung auf dem Rückweg senkrecht zu der Polarisationsrichtung der Strahlung auf dem Hinweg polarisiert ist. Es erfolgt also einerseits eine Strahlteilung und andererseits eine Änderung der Polarisationsrichtung um 90° gegenüber der Polarisationsrichtung auf dem Hinweg. Der abgeteilte Strahl ist in Figur 1 mit 42 bezeichnet. Dieser wird zur Aufnahme eines RAS-Spektrums, wie in Figur 10 dargestellt, durch ein Spektrometer 31 geleitet und das Spektrum 33 wird mit einem CCD-Array 35 als Detektor detektiert.

Bei einem alternativen Ausführungsbeispiel, das in Figur 11 dargestellt ist, wird zur Erstellung eines RAM-Signals eine monochromatische Lichtquelle 10, beispielsweise ein Laser oder eine Lichtquelle mit einem Farbfilter 37 verwendet. Die spektral begrenzte Strahlung wird mit einer Linse oder einem Spiegel 39 auf einen Punkt auf der Oberfläche der Probe gebündelt. Am Detektor 41 wird eine Intensität erfasst, mit welcher sich die Reflektivität für diese Wellenlänge punktweise auf der Oberfläche der Probe ermitteln lässt.

Die Anordnung arbeitet wie folgt:

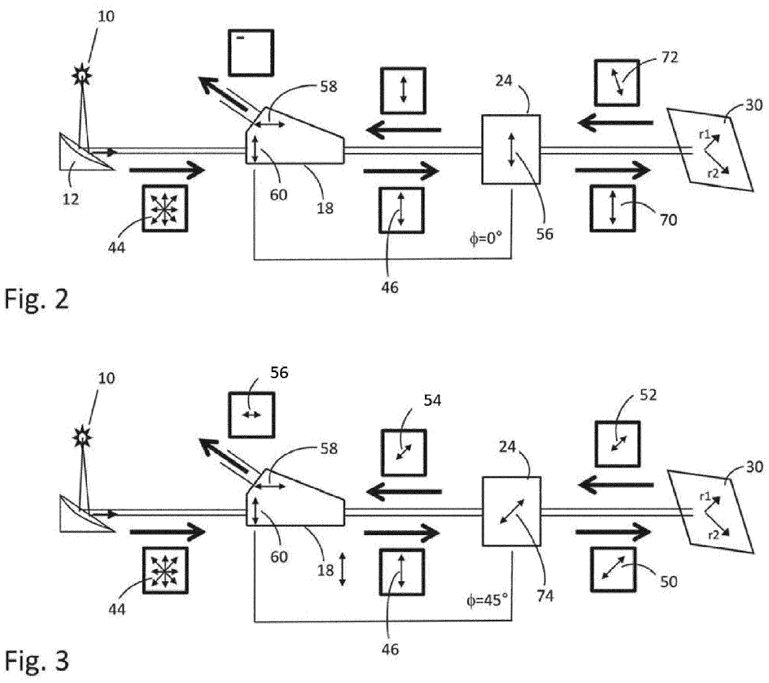

Figur 2 zeigt einen Zustand, bei dem der Polarisator 24 Strahlung mit der Polarisationsrichtung bei Winkel Φ=0° durchlässt. Dies ist durch einen Pfeil 56 repräsentiert. Die mit der Lampe 10 erzeugte Strahlung ist unpolarisiert. Das ist graphisch bei 44 illustriert. Das Fosterprisma 18 lässt von der unpolarisierten Strahlung nur eine Richtung mit Φ=0° durch. Die Durchlassrichtung ist durch einen Pfeil 60 repräsentiert. Die Polarisationsrichtung der durchgelassenen Strahlung ist bei 46 schematisch dargestellt. Da der Polarisator zu diesem Zeitpunkt Strahlung mit der gleichen Polarisationsrichtung durchlässt, gelangt sie linear in Richtung Φ=0° polarisiert auf die Oberfläche der Probe 30. Dies ist bei 70 schematisch dargestellt. An der Probe 30 wird der Strahl reflektiert. Auf der Probe 30 sind schematisch die 2 Anisotropieachsen der Oberfläche mit unterschiedlicher Reflektivität eingezeichnet, so dass hier annahmsweise gilt r1<r2. Die Anisotropie verändert die Polarisationsrichtung dahingehend dass die Polarisationsrichtung gedreht wird und sich die Gesamtintensität verringert. Dies ist bei 72 illustriert. Dann gelangt die Strahlung durch den Polarisator 24, wobei nur der Anteil parallel zu 56 hindurchgelassen wird, zum Fosterprisma 18. Das Fosterprisma 18 lässt auf dem Hinweg Strahlung mit der Polarisationsrichtung Φ=0° durch. Dies ist durch einen Pfeil 60 repräsentiert. Entsprechend lässt es auf dem Rückweg nur Strahlung mit der Polarisationsrichtung Φ=0°+90° durch. Dies ist durch den Pfeil 58 repräsentiert. Mit anderen Worten: Das Fosterprisma 18 sperrt den Rückweg. Am Detektor hinter dem Fosterprisma 18 wird keine Intensität detektiert.

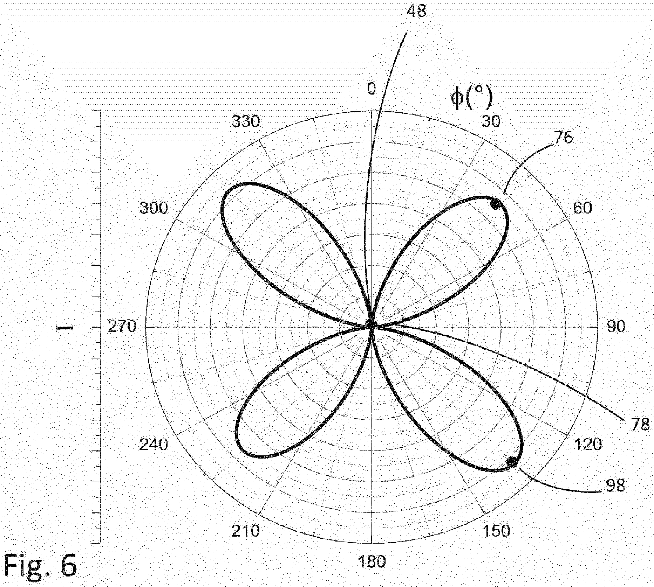

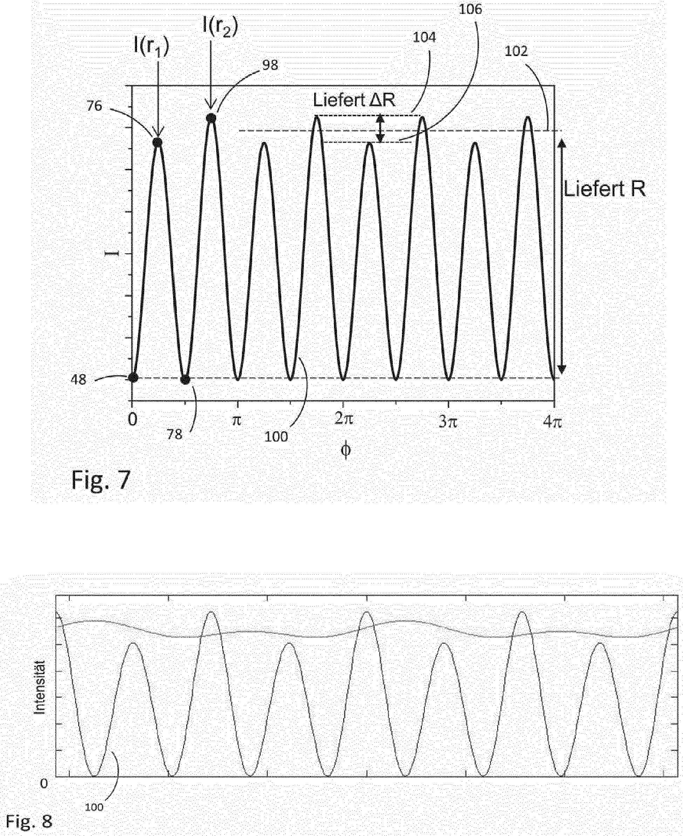

Figur 6 zeigt die Intensität am Detektor in Abhängigkeit vom Winkel. Ein Punkt auf einem kleinen Radius bedeutet, dass nur eine geringe Intensität gemessen wird. Ein weiter außen liegender Punkt bei großem Radius bedeutet, dass eine hohe Intensität gemessen wird. Bei 0° - entsprechend der in Figur 2 dargestellten Situation - wird keine Intensität gemessen. Die Kurve verläuft dort durch den Mittelpunkt 48. Figur 7 zeigt die Abhängigkeit der Intensität am Detektor in Abhängigkeit von der Phase. 2π entspricht einer vollen Umdrehung des Polarisators. Bei Φ = 0 ist auch in der Darstellung in Figur 7 die Intensität gleich Null.

Figur 3 zeigt den Zustand der Anordnung, bei welcher der Polarisator 24 eine Achteldrehung auf Φ=45° weitergedreht ist. Dies ist durch einen Pfeil 74 repräsentiert. Der Polarisationsvektor des Polarisators kann nun in zwei senkrechte Komponenten zerlegt werden die bei Φ=45° genau die gleiche Länge besitzen: Eine Komponente parallel zu 0° und eine Komponente parallel zu 90°. Es ist leicht einsehbar, dass auf dem Hinweg die Komponente parallel zu 0° vom Fosterprisma 18 und vom Polarisator 24 durchgelassen wird und die Komponente parallel zu 90° blockiert wird. Es gelangt also nur ein Teil der Strahlungsintensität sowohl durch das Fosterprisma 18, als auch durch den Polarisator 24. Dies ist durch die Darstellung bei 50 illustriert. Die Strahlung wird an der Probe 30 reflektiert und passiert den Polarisator 24 erneut.
Da der Polarisator bei Φ=45° parallel zu einer der Anisotropie-Hauptachsen der Probe steht, ändert sich zwischen 50 und 52 lediglich die Länge des Polarisationsvektors, nicht jedoch dessen Richtung. Da der Polarisator 24 auf dem Rückweg die gleiche Polarisationsrichtung durchlässt wie auf dem Hinweg, gelangt diese Strahlung ohne Intensitätsverlust zum Fosterprisma. Dies ist durch die Darstellung 52 und 54 illustriert. Das Fosterprisma 18 lässt nun nur Strahlung mit der Polarisationsrichtung Φ=90° durch. Dies ist durch einen Pfeil 58 repräsentiert. Der Polarisationsvektor der auf dem Rückweg befindlichen Strahlung kann erneut in zwei senkrechte Komponenten zerlegt werden. Nur die Komponente mit Φ=90° gelangt durch das Fosterprisma 18 und wird am Detektor detektiert. Dies ist bei 56 illustriert.

Die Situation ist in Figur 6 und 7 gut zu erkennen. Bei einem Winkel Φ=45° der Durchlassrichtung des Polarisators 24 wird eine Intensität am Punkt 76 in Figur 6 gemessen. Der Punkt 76 entspricht einem Intensitätsmaximum bei Φ =π/4 entsprechend einer Achtel-Umdrehung. Zwischen dem Nulldurchgang bei Punkt 48 und dem Maximum bei Punkt 76 steigt die Intensität sinusförmig an. Danach fällt sie wieder bis zum Punkt 78 ab.

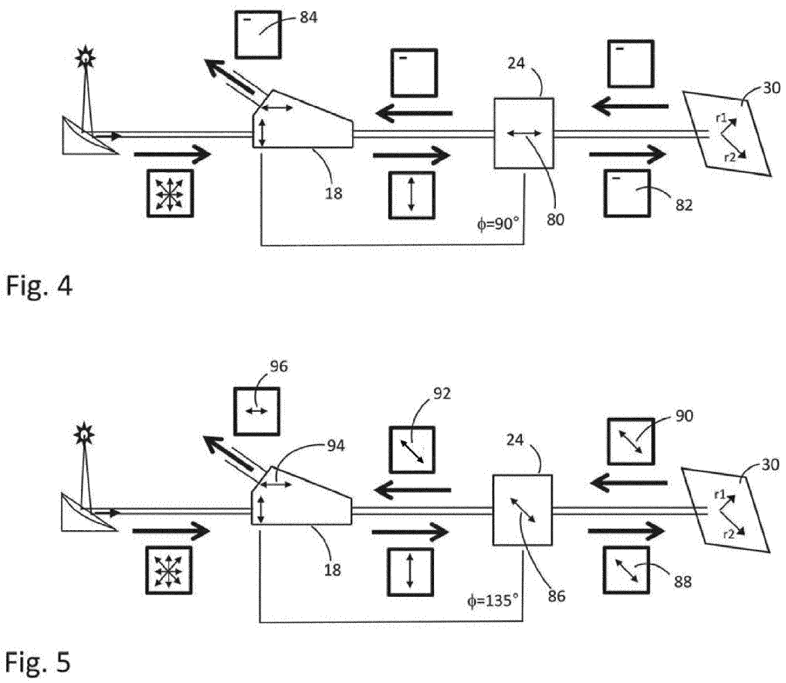

Der Nulldurchgang bei Punkt 78 ist in Figur 4 dargestellt. Figur 4 zeigt den Zustand der Anordnung, bei welcher der Polarisator 24 eine Vierteldrehung auf Φ=90° weitergedreht ist. Dies ist durch einen Pfeil 80 repräsentiert. Der Polarisationsvektor des Polarisators kann nun in zwei senkrechte Komponenten zerlegt werden, die bei Φ=90° aus einer Komponente parallel zu 0° und eine Komponente parallel zu 90° besteht. Es ist leicht einsehbar, dass die Komponente parallel zu 0° vom Fosterprisma 18 durchgelassen, aber vom Polarisator 24 gesperrt wird und die Komponente parallel zu 90°bereits vom Fosterprisma 18 blockiert wird, auch wenn sie vom Polarisator 24 vollständig durchgelassen wird. Es gelangt also keine Strahlungsintensität, die vom Fosterprisma 18 durchgelassen wird, auch durch den Polarisator 24. Dies ist durch die Darstellung bei 82 illustriert. Die Probe 30 und der Detektor bleiben vollständig unbeleuchtet. Dies ist durch die Darstellung 84 illustriert. Es ergibt sich ein Intensitätsminium in Figur 6 bei 90°und in Figur 7 bei Φ =π/2.

Figur 5 zeigt den Zustand der Anordnung, bei welcher der Polarisator 24 eine Dreiachteldrehung auf Φ=135° weitergedreht ist. Dies ist durch einen Pfeil 86 repräsentiert. Der Polarisationsvektor des Polarisators kann erneut in zwei senkrechte Komponenten zerlegt werden, die bei Φ=135° wieder genau die gleiche Länge besitzen. Eine Komponente parallel zu 0° und eine Komponente parallel zu 90°. Es ist leicht einsehbar, dass auf dem Hinweg die Komponente parallel zu 0° vom Fosterprisma 18 und vom Polarisator 24 durchgelassen wird und die Komponente parallel zu 90° blockiert wird. Es gelangt also nur ein Teil der Strahlungsintensität sowohl durch das Fosterprisma 18, als auch durch den Polarisator 24. Dies ist durch die Darstellung bei 88 illustriert. Die Strahlung wird an der Probe 30 reflektiert und passiert den Polarisator 24 erneut. Da der Polarisator bei Φ=135° parallel zu einer der Anisotropie-Hauptachsen der Probe steht, ändert sich zwischen 88 und 90 lediglich die Länge des Polarisationsvektors, nicht jedoch dessen Richtung. Da der Polarisator 24 auf dem Rückweg die gleiche Polarisationsrichtung durchlässt wie auf dem Hinweg, gelangt diese Strahlung ohne Intensitätsverlust zum Fosterprisma. Dies ist durch die Darstellung 90 und 92 illustriert. Das Fosterprisma 18 lässt nun nur Strahlung mit der Polarisationsrichtung Φ=90° durch. Dies ist durch einen Pfeil 94 repräsentiert. Der Polarisationsvektor der auf dem Rückweg befindlichen Strahlung kann erneut in zwei senkrechte Komponenten zerlegt werden. Nur die Komponente mit Φ=90° gelangt durch das Fosterprisma 18 und wird am Detektor detektiert. Dies ist bei 96 illustriert.

Die Situation ist in Figur 6 und 7 gut zu erkennen. Bei einem Winkel Φ=135° der Durchlassrichtung des Polarisators 24 wird eine Intensität am Punkt 98 in Figur 6 gemessen. Der Punkt 98 entspricht einem Intensitätsmaximum bei Φ =3π/4 entsprechend einer Dreiachtel-Umdrehung in Figur 7.

Zwischen den hier beispielhaft erläuterten Zuständen befinden sich Zwischenzustände die einen sinusähnlichen Intensitätsverlauf 100 ergeben, wie er in Figur 7 und 8 dargestellt ist. Figur 8 zeigt zum Vergleich den Intensitätsverlauf von Anordnungen aus dem Stand der Technik ohne Nulldurchgänge. Wie oben erläutert ergeben sich bei der vorliegenden Erfindung für eine beliebige Probe genau 4 Nulldurchgänge der Intensität pro Umdrehung des Polarisators. Wenn die Probe eine Polarisations-Anisotropie aufweist, weicht der Signalverlauf bezüglich der Höhe der Intensitätsmaxima ab. Dies ist in Figur 7 an den Intensitätsmaxima erkennbar. Die mittlere Amplitude R der Intensität ist mit einer gestrichelten Linie 102 dargestellt. Eine Polarisations-Anisotropie der Probe führt nun zu einer Erhöhung und Verringerung der Maxima des Signals, so dass sich eine Differenz ΔR ergibt, die durch gestrichelte Linien 104 und 106 definiert ist. ΔR lässt sich somit auf der doppelten Rotationsfrequenz 2f und R auf der 4-fachen Rotationsfrequenz 4f messen. ΔR/R ist ein direktes Maß für die Polarisations-Anisotropie. Man erkennt, dass es sich um ein selbstreferenzierendes System handelt.

Der Vorteil dieser Anordnung ist es, dass Komponentenfehler sich mit einer anderen Frequenz, nämlich mit der einfachen Rotationsfrequenz f des rotierenden Polarisators auf das Signal auswirken. Durch Fourieranalyse des Signals können also Streulicht und Einflüsse der Komponenten leicht vom eigentlichen Signal getrennt werden.

Da alle für die Messung benötigten Signalanteile moduliert sind, eignet sich dieses Verfahren für die Verwendung von Infrarotdetektoren, die in der Regel kein DC(Gleichstrom)-Signal messen können.

Mit der beschriebenen Anordnung, d.h. Kombination eines Fosterprismas oder anderen geeigneten Polarisationsstrahlteilers, der bei Umkehrung der Durchgangsrichtung die Polarisationszustände erhält, mit einem rotierenden Polarisator und der Beleuchtung der Probe unter einem rechten Winkel kann sowohl RAS als auch RAM durchgeführt werden. Der Fachmann kennt daher vielfältige Ausgestaltungen der Erfindung, die an den jeweiligen Anwendungsfall angepasst sind. So kann es sinnvoll sein, andere Lampen, beispielsweise Laser, LEDs, Metalldampfleuchten mit und ohne Farbfilter oder Monochromator einzusetzen. Es können für RAS beliebige Spektrometer und durchstimmbare Monochromatoren eingesetzt werden, die beispielsweise in Littrow-Anordnung arbeiten und Echellegitter, Holographische Gitter, Prismen oder beliebige andere Dispersionsmittel verwenden. Derartige Ausgestaltungen der Erfindung ergeben sich aus dem Anwendungsfall und sind von der Erfindung umfasst, die ausschließlich durch die Merkmale der beigefügten Ansprüche begrenzt ist.

## Patentansprüche

1. Anordnung zur Erfassung der Reflexions-Anisotropie einer Probe (30), enthaltend
(a) eine Strahlungsquelle (10) zur Beleuchtung der Probe (30) derart, dass die von der Strahlungsquelle (30) erzeugte Strahlung im rechten Winkel auf die Probe (30) fällt;
(b) einen im Strahlengang zwischen Strahlungsquelle und Probe angeordneten Polarisationsstrahlteiler (18) der die Strahlung auf dem Hinweg in einer ersten Polarisationsrichtung polarisiert, und der die Strahlung bei Umkehrung der Durchgangsrichtung in einen ersten und einen zweiten Teil aufteilt, wobei der erste Teil die erste Polarisationsrichtung aufweist und der zweite Teil eine zweite, zu dem ersten Teil senkrechte Polarisationsrichtung aufweist;
(c) einen Detektor zur Erfassung der von der Probe (30) reflektierten Strahlung, derart positioniert, dass er hinter dem Polarisationsstrahlteiler die Strahlung des zweiten Teiles der Strahlung erfasst;
(d) Mittel zur Polarisationsmodulation (24), welche im Strahlengang zwischen Polarisationsstrahlteiler (18) und Probe (30) angeordnet sind;
**dadurch gekennzeichnet, dass**
(e) die Mittel zur Polarisationsmodulation einen rotierenden Polarisator (24) enthalten.

2. Anordnung nach Anspruch 1, **dadurch gekennzeichnet, dass** der Polarisationsstrahlteiler von einem Foster-Prisma (18) gebildet ist.

3. Anordnung nach einem der vorgehenden Ansprüche, **dadurch gekennzeichnet, dass** der Detektor ein CCD-Array oder anderer Zeilen- oder Flächendetektor mit einer Vielzahl von Bildpunkten ist.

4. Anordnung nach einem der vorgehenden Ansprüche, **dadurch gekennzeichnet, dass** die Strahlungsquelle (10) zur Durchführung von Reflexions-Anisotropie-Spektroskopie ein Xe-Hochdruck-Lampe oder eine andere Strahlungsquelle mit einem kontinuierlichen Wellenlängenspektrum ist, und ein Spektrometer oder Spektalfilter im Strahlengang vor dem Detektor angeordnet ist.

5. Anordnung nach einem der vorgehenden Ansprüche, **dadurch gekennzeichnet, dass** optische Mittel (12) zur Erzeugung eines parallelen Strahlbündels im Strahlengang vorgesehen sind, mit welchem die Probe (30) flächig beleuchtbar ist.

6. Anordnung nach einem der vorgehenden Ansprüche, **dadurch gekennzeichnet, dass** im Strahlengang optische Mittel zur Veränderung der Phase vorgesehen sind.

7. Anordnung nach einem der vorgehenden Ansprüche 1 bis 3, **dadurch gekennzeichnet, dass** die Strahlungsquelle (10) ein Laser, eine andere monochromatische Strahlungsquelle oder eine Strahlungsquelle mit einem Spektralfilter ist und die Anordnung zur Durchführung von Reflexions-Mikroskopie ausgebildet ist.

8. Anordnung nach einem der vorgehenden Ansprüche **gekennzeichnet durch** einen Infrarot-Detektor als Detektor zur Messung modulierter Intensitäten.

9. Verfahren zur Erfassung der Reflexions-Anisotropie einer Probe mit den Schritten:
(a) Erzeugen von Strahlung mit undefiniertem Polarisationszustand;
(b) Erzeugen eines definierten Polarisationszustands der Strahlung mittels eines Polarisationsstrahlteilers, der die Strahlung auf dem Hinweg in einer ersten Polarisationsrichtung polarisiert;
(c) Modulieren des Polarisationszustands der polarisierten Strahlung durch einen rotierenden Polarisator;
(d) Reflektieren der Strahlung an der Probe unter einem rechten Winkel in sich selbst zurück;
(e) Leiten der reflektierten Strahlung in umgekehrter Richtung durch den rotierenden Polarisator und den Polarisationsstrahlteiler (18), so dass der Strahl in einen ersten und einen zweiten Teil geteilt wird, wobei der erste Teil die erste Polarisationsrichtung aufweist und der zweite Teil eine zu dem ersten Teil senkrechte Polarisationsrichtung aufweist; und
(f) Erfassen des von der Probe reflektierten des zweiten Teils der Strahlung an einem Detektor hinter dem Polarisationsstrahlteiler, der eine zu der Polarisationsrichtung der Strahlung des Hinwegs senkrechte Polarisationsrichtung hat.

10. Verfahren nach Anspruch 9, **dadurch gekennzeichnet, dass** ein 2-dimensionales Bild der Probe zur quantitativ ortsaufgelösten Messung der Anisotropie erstellt wird.

11. Verfahren nach Anspruch 9, **dadurch gekennzeichnet, dass** die Probe oder ein Punkt der Probenoberfläche spektral zerlegt von einem 1-dimensionalen Detektor aufgenommen wird.

## Claims

1. Assembly for the detection of the reflectivity anisotropy of a sample (30) comprising
(a) a radiation source (10) for the illumination of the sample (30) in such a way that the radiation generated by the radiation source (30) is perpendicularly incident on the sample (30);
(b) a polarization beam splitter (18) arranged in the optical path between the radiation source and the sample polarizing the radiation on the forward run in a first direction of polarization, and splitting the radiation in a first and a second portion when reversing the passing direction, wherein the first portion has the first direction of polarization and the second portion has the second direction of polarization which is perpendicular to the first direction of polarization;
(c) a detector for detecting the radiation reflected by the sample (30) which is positioned in such a way that it detects the radiation of the second portion of the radiation behind the polarization beam splitter;
(d) means (24) for modulating the polarization which is arranged in the optical path between the polarization beam splitter (18) and the sample (30);
**characterized in that**
(e) the means for modulating the polarization comprise a rotating polarizer (24).

2. Assembly according to claim 1, **characterized in that** the polarization beam splitter is a Foster prism (18).

3. Assembly according to any of the preceding claims, **characterized in that** the detector is a CCD array or any other line- or array detector with a plurality of pixels.

4. Assembly according to any of the preceding claims, **characterized in that** the radiation source (10) for carrying out the reflectivity anisotropy spectroscopy is a Xe-high pressure lamp or any other radiation source with a continuous wavelength spectrum and the spectrometer or spectral filter is arranged in the optical path before the detector.

5. Assembly according to any of the preceding claims, **characterized in that** optical means (12) are provided in the optical path for the generation of a parallel bundle of rays, which is adapted to provide an array illumination of the sample (30).

6. Assembly according to any of the preceding claims, **characterized in that** optical means for changing the phase are provided in the optical path.

7. Assembly according to any of the preceding claims 1 to 3, **characterized in that** the radiation source (10) is a laser, another monochromatic radiation source or a radiation source with a spectral filter and the assembly is designed for carrying out reflectivity microscopy.

8. Assembly according to any of the preceding claims, **characterized by** an infrared detector as a detector for measuring modulated intensities.

9. Method for the detection of the reflectivity anisotropy of a sample comprising the steps of:
(a) generating radiation with undefined polarization state;
(b) generating a defined polarization state of the radiation by means of a polarization beam splitter polarizing the radiation on the forward run in a first direction of polarization;
(c) modulating the polarization state of the polarized radiation by a rotating polarizer;
(d) reflecting the radiation at the sample at a perpendicular angle into its incident optical path;
(e) guiding the reflected radiation in a reverse direction through the rotating polarizer and the polarization beam splitter (18) whereby the beam is split into a first and a second portion, wherein the first portion has the first direction of polarization and the second portion has the second direction of polarization which is perpendicular to the first direction of polarization; and
(f) detecting the second portion of the radiation reflected by the sample at a detector which is positioned behind the polarization beam splitter, which has a polarization direction perpendicular to the polarization direction of the radiation on the forward run.

10. Method according to claim 9, **characterized in that** a 2-dimensional image of the sample is produced for the quantitatively spatially resolved measurement of the anisotropy.

11. Method according to claim 9, **characterized in that** the sample or a point on the sample surface is spectrally dissolved and recorded with a 1-dimensional detector.

## Revendications

1. Disposition destinée à saisir l'anisotropie de réflexion d'un échantillon (30), comprenant
(a) une source de rayonnement (10) destinée à éclairer l'échantillon (30) de sorte que le rayonnement généré par la source de rayonnement (30) frappe l'échantillon (30) en angle droit ;
(b) un séparateur de faisceau de polarisation (18) disposé dans la marche des rayons entre la source de rayonnement et l'échantillon qui polarise le rayonnement à l'aller dans un premier sens de polarisation et qui sépare le rayonnement, une fois le sens de passage inversé, en une première et une seconde partie, la première partie présentant le premier sens de polarisation et la seconde partie présentant un second sens de polarisation perpendiculaire à la première partie ;
(c) un détecteur destiné à saisir le rayonnement réfléchi par l'échantillon (30) et positionné de sorte à saisir, derrière le séparateur de faisceau de polarisation, le rayonnement de la seconde partie du rayonnement ;
(d) des moyens destinés à la modulation de la polarisation (24) et disposés dans la marche des rayons entre le séparateur de faisceau de polarisation (18) et l'échantillon (30) ;
**caractérisée en ce que**
(e) les moyens destinés à la modulation de la polarisation comprennent un polariseur rotatif (24).

2. Disposition selon la revendication 1, **caractérisée en ce que** le séparateur de faisceau de polarisation est formé d'un prisme de Foster (18).

3. Disposition selon l'une quelconque des revendications précédentes, **caractérisée en ce que** le détecteur est un réseau d'éléments à couplage de charge ou un autre détecteur lignes ou surface muni de nombreux éléments d'image.

4. Disposition selon l'une quelconque des revendications précédentes, **caractérisée en ce que** la source de rayonnement (10) destinée à réaliser la spectroscopie d'anisotropie de réflexion est une lampe à décharge haute pression au Xe ou une autre source de rayonnement présentant un spectre de longueurs d'onde continu et **qu**'un spectromètre ou un filtre spectral est disposé dans la marche des rayons devant le détecteur.

5. Disposition selon l'une quelconque des revendications précédentes, **caractérisée en ce qu'**il est prévu dans la marche des rayons des moyens optiques (12) destinés à générer un faisceau de rayons parallèles et permettant d'éclairer l'échantillon (30) en nappe.

6. Disposition selon l'une quelconque des revendications précédentes, **caractérisée en ce qu'**il est prévu dans la marche des rayons des moyens optiques destinés à modifier la phase.

7. Disposition selon l'une quelconque des revendications précédentes 1 à 3, **caractérisée en ce que** la source de rayonnement (10) est un laser, une autre source de rayonnement monochromatique ou une source de rayonnement à filtre spectral et **que** la disposition est configurée pour réaliser une microscopie de réflexion.

8. Disposition selon l'une quelconque des revendications précédentes, **caractérisée par** un détecteur infrarouge se présentant sous forme de détecteur destiné à mesurer des intensités modulées.

9. Procédé destiné à saisir l'anisotropie de réflexion d'un échantillon comportant les étapes de :
(a) génération d'un rayonnement présentant un état de polarisation indéfini ;
(b) génération d'un état de polarisation défini du rayonnement au moyen d'un séparateur de faisceau de polarisation qui polarise le rayonnement à l'aller dans un premier sens de polarisation ;
(c) modulation de l'état de polarisation du rayonnement polarisé par un polariseur rotatif ;
(d) réflexion du rayonnement à l'intérieur de l'échantillon en angle droit ;
(e) guidage du rayonnement réfléchi en sens inverse par le polariseur rotatif et le séparateur de faisceau de polarisation (18) de sorte que le faisceau est séparé en une première et en une seconde partie, la première partie présentant le premier sens de polarisation et la seconde partie présentant un sens de polarisation perpendiculaire à la première partie ; et
(f) saisie de la seconde partie du rayonnement réfléchie par l'échantillon dans un détecteur derrière le séparateur de faisceau de polarisation qui a un sens de polarisation perpendiculaire au sens de polarisation du rayonnement aller.

10. Procédé selon la revendication 9, **caractérisé en ce qu'**une image bidimensionnelle de l'échantillon est créée pour la mesure à résolution spatiale quantitative de l'anisotropie.

11. Procédé selon la revendication 9, **caractérisé en ce que** l'échantillon ou un point de la surface de l'échantillon est capté par un détecteur unidimensionnel en étant décomposé d'un point de vue spectral.
